# EUROPÄISCHE PATENTSCHRIFT

(11) **EP 3 568 539 B1**
(45) Veröffentlichungstag und Bekanntmachung des Hinweises auf die Patenterteilung: **21.10.2020**
(21) Anmeldenummer: 17811559.8
(22) Anmeldetag: 07.12.2017
(51) Int. Cl.: E04B 2/74, E04B 1/94

(54) **BRANDSCHUTZPROFIL, BRANDSCHUTZFUGENBAUGRUPPE UND VERFAHREN ZUR MONTAGE EINER BRANDSCHUTZFUGENBAUGRUPPE**
FIRE-PROOF PROFILE, FIRE-PROOF JOINT ASSEMBLY AND METHOD FOR MOUNTING A FIRE-PROOF JOINT ASSEMBLY
PROFILÉ COUPE-FEU, MODULE DE JOINT COUPE-FEU ET PROCÉDÉ DE MONTAGE DE MODULE DE JOINT COUPE-FEU

(30) Priorität: 11.01.2017 EP 17150967
(43) Veröffentlichungstag der Anmeldung: 20.11.2019
(73) Patentinhaber: Hilti Aktiengesellschaft, 9494 Schaan (LI)
(72) Erfinder: FÖRG, Christian, 86807 Buchloe (DE)
(74) Vertreter: Hilti Aktiengesellschaft Corporate Intellectual Property
(86) Internationale Anmeldenummer: PCT/EP2017/081765
(87) Internationale Veröffentlichungsnummer: WO 2018/130347

(56) Entgegenhaltungen:
- FR-A5- 2 079 734
- US-A- 4 430 832
- US-A1- 2009 049 781
- US-A1- 2011 011 019
- US-A1- 2015 368 898

## Beschreibung

Die Erfindung betrifft ein Brandschutzprofil zum Abdichten einer Bauwerksfuge, insbesondere einer Anschlussfuge zwischen einer Trockenbauwand und einer Decke. Außerdem betrifft die Erfindung eine Brandschutzfugenbaugruppe mit einem Brandschutzprofil sowie ein Verfahren zur Montage einer Brandschutzfugenbaugruppe.

Um eine Fuge zwischen einer Trockenbauwand und einem anderen Bauwerksteil, zum Beispiel einer Betondecke, brandsicher abzudichten, gibt es mehrere bekannte Lösungen. Beispielsweise kann eine Dichtmasse in den bestehenden Spalt eingebracht werden, was aber in der Verarbeitung aufwendig ist und aufgrund der Aushärtung der Dichtmasse nur eine eingeschränkte Bewegungsaufnahme ermöglicht. Dies ist nachteilig, wenn die Fuge beispielsweise aufgrund wechselnder Temperaturen ihre Ausdehnung ändert.

Es wurden auch bereits diverse Trockenbauprofile beschrieben, z.B. in der US 2015/0368898 A1 ein Profil mit aufgesteckten intumeszierenden Elementen. Jedoch besteht auch hier die Problematik, eine ausreichende Bewegungsaufnahme zu gewährleisten. Außerdem wirken sich zusätzlich eingesetzte Profile oft nachteilig auf die Optik der Bauwerksfuge aus. US 2011/011019 A1 offenbart die Merkmale des Oberbegriffs des Anspruchs 1.

Aufgabe der Erfindung ist es, die Abdichtung einer Bauwerksfuge mit einer Brandschutzfunktion, einer großen Bewegungsaufnahme sowie einer ansprechenden Optik zu erzielen.

Diese Aufgabe wird mit den Merkmalen der Ansprüche 1 und 13 gelöst. Das Brandschutzprofil zum Abdichten einer Bauwerksfuge, insbesondere einer Anschlussfuge zwischen einer Trockenbauwand und einer Decke, weist ein Profilelement auf, das eine Innenseite sowie eine entgegengesetzt zur Innenseite angeordnete Außenseite hat, und einen Innenabschnitt sowie zumindest einen Bogenabschnitt und zumindest einen Flügelabschnitt umfasst. Der Flügelabschnitt ist über den Bogenabschnitt mit dem Innenabschnitt verbunden. Außerdem ist wenigstens ein Intumeszenzelement aus intumeszierendem Material vorgesehen. In einer alternativen Ausführungsform besteht das Brandschutzprofil vollständig aus einem flammgeschützten und intumeszierenden Material. Der Bogenabschnitt weist eine Wandstärke auf, die sich von dem Innenabschnitt und/oder dem Flügelabschnitt gegebenenfalls unterscheidet. Die Veränderung der Wandstärke im Bogenabschnitt erlaubt es, den Flügelabschnitt mit dem Innenabschnitt verschwenkbar zu verbinden und gleichzeitig im Bogenabschnitt eine ausreichende Flexibilität und Verformbarkeit bereitzustellen, um Dehnungsbewegungen der Bauwerksfuge auf einfache Weise auszugleichen. Durch das integrierte Intumeszenzelement ist der Brandschutz gegeben.

Über die Wandstärke des Bogenabschnitts lassen sich dessen Verformungseigenschaften einfach einstellen, wobei eine dünnere Wandstärke eine höhere Flexibilität zur Folge hat und somit ein definiertes elastisches Verformen bei geringer Krafteinwirkung, während eine dickere Wandstärke die Stabilität des Brandschutzprofils verbessert und gegebenenfalls bessere Brandschutzeigenschaften bietet.

Das Profilelement ist vorzugsweise einstückig ausgebildet, wobei der Innenabschnitt, der Bogenabschnitt und der Flügelabschnitt ineinander übergehen und aus demselben Material, beispielsweise einem geeigneten Kunststoff, gefertigt sein können. Das Intumeszenzelement lässt sich einfach an das vorgefertigte Profilelement montieren.

Vorzugsweise weist der Bogenabschnitt zumindest abschnittsweise eine geringere Wandstärke auf als der Innenabschnitt und/oder der Flügelabschnitt, sodass der Bogenabschnitt bei einer geringeren Krafteinwirkung verformbar ist als der Innenabschnitt bzw. der Flügelabschnitt.

Erfindungsgemäß ist der Bogenabschnitt doppelwandig ausgebildet und weist einen inneren und einen äußeren Bogenabschnitt auf, wobei der innere Bogenabschnitt als Strebe mit einem ersten Verbindungsabschnitt und einem zweiten Verbindungsabschnitt geformt ist und mit dem äußeren Bogenabschnitt zusammen eine Kammer bildet. Die Kammer verläuft dabei senkrecht zum Querschnitt des Brandschutzprofils und vorzugsweise über die gesamte Länge des Brandschutzprofils parallel zur Bauwerksfuge.

Zwischen den beiden Verbindungsabschnitten ist vorzugsweise eine Sollbiegestelle vorgesehen, an der die beiden Verbindungsabschnitte gegeneinander verschwenken können. Die Sollbiegestelle ist beispielsweise durch eine Reduzierung der Materialstärke zwischen den Verbindungsabschnitten realisiert.

Der erste Verbindungsabschnitt ist vorteilhaft am Innenabschnitt befestigt, während der zweite Verbindungsabschnitt am Flügelabschnitt befestigt sein kann.

An der Außenseite geht der äußere Bogenabschnitt vorzugsweise ohne erkennbaren Übergang in den Innenabschnitt und in den Flügelabschnitt über.

Die Materialdicke des äußeren Bogenabschnitts ist vorteilhaft etwas geringer gewählt als die des Innenabschnitts und/oder des Flügelabschnitts, sodass der äußere Bogenabschnitt problemlos elastisch verformbar ist. Der innere Bogenabschnitt wirkt dabei unter anderem formgebend für die Krümmung des äußeren Bogenabschnitts im montierten Zustand und kann als mechanische Verstärkung dienen. Außerdem kann durch die zwischen dem inneren und dem äußeren Bogenabschnitt gebildete Kammer die Brandschutzwirkung verstärkt werden.

Es wäre auch denkbar, den Bogenabschnitt mit einer einfachen Wand auszubilden und im Bogenabschnitt die Materialstärke zu reduzieren, um eine erhöhte Flexibilität gegenüber dem Flügelabschnitt und dem Innenabschnitt zu erreichen.

Die Bogenabschnitte sollten grundsätzlich so gestaltet sein, dass sie durch die Dehnungskräfte beim Ausdehnen und Zusammenziehen der Fuge einfach verformbar sind und die gesamte Bewegungsenergie aufnehmen, ohne dass beispielsweise die Flügelabschnitte belastet werden.

Das wenigstens eine Intumeszenzelement ist auf der Innenseite am Profilelement vorgesehen. Das Intumeszenzelement kann zylinderförmig gestaltet sein, insbesondere mit quaderförmigem Querschnitt, z.B. als über die gesamte Länge des Brandschutzprofils verlaufendes Brandschutzband oder als Schaumelement. In diesem Fall ist das Intumeszenzelement vorzugsweise am Innenabschnitt angeordnet, vorteilhaft in der Nähe der Verbindungsstelle des ersten Verbindungsabschnitts mit dem Innenabschnitt.

Erfindungsgemäß ist das Intumeszenzelement als Schicht vorgesehen, beispielsweise als aufgebrachte Beschichtung, die sich vom Innenabschnitt bis zum Flügelabschnitt erstreckt und die vorteilhaft zumindest an der Innenseite des inneren Bogenabschnitts vorgesehen ist.

Das Brandschutzprofil kann einen Abstandshalter aufweisen, der vorzugsweise an der Innenseite des Innenabschnitts vorgesehen ist. Dieser Abstandshalter gibt beispielsweise die Position eines Anschlusselements bezüglich des Profilelements vor, wobei das Anschlusselement beispielsweise ein oberes Ende der Trockenbauwand umgreift. Der Abstandshalter legt somit den minimalen Abstand zwischen dem Flügelabschnitt und dem Anschlusselement fest, um einen ausreichenden Bewegungsspielraum für den Bogenabschnitt bereitzustellen.

Der Abstandshalter kann z.B. durch das Intumeszenzelement gebildet sein. Es ist aber auch möglich, den Abstandshalter unabhängig vom Intumeszenzelement an der Innenseite des Innenabschnitts auszubilden, vorzugsweise einstückig mit dem restlichen Profilelement. In diesem Fall kann das Intumeszenzelement auch zwischen dem Abstandshalter und dem Flügelabschnitt positioniert sein.

Der Flügelabschnitt umfasst bevorzugt einen Befestigungsabschnitt, insbesondere im Bereich eines freien Randes des Flügelabschnitts, über den sich der Flügelabschnitt auf einfache Weise fest und bleibend an einer Wandoberfläche der Trockenbauwand fixieren lässt. Der Befestigungsabschnitt weist beispielsweise Befestigungslöcher auf, die es erleichtern, den Flügelabschnitt durch Klammern oder Kleben mit der Wandoberfläche zu verbinden. Alternativ oder zusätzlich kann der Befestigungsabschnitt eine Stufe an der Außenseite aufweisen, die vorteilhaft dazu genutzt werden kann, um mit einer Spachtelmasse einen sauberen Übergang zwischen der Wandoberfläche und dem anschließenden Bogenabschnitt herzustellen und so eine ansprechende Optik zu schaffen

Das Brandschutzprofil kann auf einen an einer Seite vorgesehenen Bogenabschnitt und daran anschließenden Flügelabschnitt beschränkt sein. Ein derartiges Brandschutzprofil kann z.B. für Trockenbauwände mit einer Breite eingesetzt werden, für die kein passendes vorgefertigtes beidseitiges Brandschutzprofil verfügbar ist.

In vielen Fällen ist es jedoch vorteilhaft, wenn das Profilelement beidseitig bezüglich seiner Breite jeweils einen Bogenabschnitt und einen anschließenden Flügelabschnitt aufweist. Das Brandschutzprofil ist dabei vorzugsweise spiegelsymmetrisch geformt. Beide Bogenabschnitte und Flügelabschnitte erstrecken sich vorzugsweise über die gesamte Länge des Brandschutzprofils senkrecht zur Breite des Brandschutzprofils.

Das Profilelement ist vorzugsweise aus Kunststoff gebildet, sodass es sich auf einfache Weise beispielsweise mittels Extrudieren herstellen lässt. Dies ermöglicht es, das Profilelement mit gleichbleibendem Querschnitt in beliebiger Länge herzustellen. Durch die Verwendung eines geeigneten Kunststoffmaterials lässt sich außerdem die Flexibilität des Bogenabschnitts reproduzierbar im gewünschten Maß realisieren.

Grundsätzlich wäre es auch denkbar, das Profilelement auf Basis eines intumeszierenden Kunststoffs herzustellen, wobei dann das Intumeszenzelement direkt in das Profilelement integriert wäre.

Das Brandschutzprofil kann außerdem ein Dichtelement umfassen. Dieses ist vorzugsweise an der Außenseite des Innenabschnitts des Profilelements angeordnet und kann dazu dienen, das Brandschutzprofil zusätzlich gegenüber dem die Bauwerksfuge begrenzenden Bauwerksteil abzudichten.

Zur Befestigung eines Anschlusselements lässt sich das Brandschutzprofil mit einem Haftstreifen versehen. Dieser ist dann vorzugsweise an der zum Anschlusselement gerichteten Innenseite des Innenabschnitts platziert, um eine Vormontage des Brandschutzprofils am Anschlussprofil zu vereinfachen.

Die Verwendung eines Haftstreifens ist insbesondere vorteilhaft, wenn das Brandschutzprofil nur auf einer Seite einen Bogenabschnitt und einen Flügelabschnitt aufweist, um beispielsweise das Anschlusselement an der gewünschten Position am Brandschutzprofil zu positionieren.

Die oben genannte Aufgabe wird auch mit einer Brandschutzfugenbaugruppe gelöst, die ein Brandschutzprofil aufweist, wie es oben beschrieben wurde, sowie ein Anschlusselement einer Wand, insbesondere einer Trockenbauwand, das mit der Trockenbauwand verbindbar ist. Das Anschlusselement weist z.B. ein U-Profil auf.

Das Anschlusselement liegt vorteilhaft an der Innenseite des Innenabschnitts an und kann dort bleibend befestigt sein, z.B. mittels eines oben beschriebenen Haftstreifens. Das Anschlusselement kann am Brandschutzprofil vormontiert sein.

Um eine freie Bewegung des Bogenabschnitts nicht zu behindern, sollte dieser und vorzugsweise auch der Flügelabschnitt jedoch im komplett montierten Zustand nicht in Kontakt mit dem Anschlusselement kommen. Hierzu kann beispielsweise ein oben beschriebener Abstandshalter eingesetzt werden, der eine Bewegung des Anschlusselements bezüglich des Innenabschnitts in Richtung zum Bogenabschnitt begrenzt.

Die Trockenbauwand umfasst normalerweise ein Ständerwerk sowie seitlich an diesem befestigte Wandplatten, insbesondere Gipskartonplatten. Eine raumseitige Wandoberfläche der Trockenbauwand ist in diesem Fall durch eine Außenoberfläche der Wandplatten gebildet.

Das Brandschutzprofil ist vorzugsweise so in der Bauwerksfuge positioniert, dass sich der Innenabschnitt des Profilelements gegenüber dem fugenseitigen Ende der Trockenbauwand befindet und der Bogenabschnitt und der Flügelabschnitt seitlich der Trockenbauwand liegen. Das Profilelement ist dabei fest mit dem Bauwerksteil verbunden, was eine frühzeitige Installation des Brandschutzprofils während der Montage ermöglicht.

Das Anschlusselement ist auf einen freien Rand des Ständerwerks aufgesteckt, wobei die seitlichen Schenkel des Anschlusselements zwischen dem Ständerwerk und den auf diesen aufgesetzten Wandplatten angeordnet ist.

Wenn das Anschlusselement fest mit dem Brandschutzprofil verbunden ist, ist das Anschlusselement vorteilhaft zumindest abschnittsweise zwischen dem Ständerwerk und der Wandplatte verschiebbar angeordnet, um einen Bewegungsausgleich zu erlauben, wenn sich die Bauwerksfuge ausdehnt bzw. zusammenzieht. Generell sollte das Anschlusselement senkrecht zu dem die Bauwerksfuge begrenzenden Bauwerksteil verschiebbar sein, also bei einer Bauwerksfuge zwischen einer Wand und einer Decke senkrecht zur Decke.

In der Brandschutzfugenbaugruppe liegt vorzugsweise der Flügelabschnitt zumindest abschnittsweise an einer raumseitigen Wandoberfläche der Trockenbauwand an und ist dort insbesondere wie oben beschrieben bleibend befestigt.

In einem erfindungsgemäßen Verfahren zur Montage einer Brandschutzfugenbaugruppe, wie sie oben beschrieben wurde, werden zunächst das Brandschutzprofil und das Anschlusselement an einem Bauwerksteil, insbesondere einer Decke, befestigt. Danach wird das Ständerwerk der Trockenbauwand installiert. Mindestens eine Wandplatte wird am Ständerwerk befestigt. Anschließend wird der Flügelabschnitt an der raumseitigen Wandoberfläche der Wandplatte befestigt, wobei der Flügelabschnitt zur Wandplatte hin verstellt und der Bogenabschnitt dabei elastisch verformt wird. Nach erfolgter Montage erstreckt sich also das Profilelement zwischen der raumseitigen Wandoberfläche und dem Bauwerksteil, wobei das Brandschutzprofil sowohl an der Trockenbauwand als auch am Bauwerksteil befestigt ist, sodass die Bauwerksfuge durch das Brandschutzprofil komplett geschlossen ist. Ein Bewegungsausgleich ist dennoch möglich, da der Bogenabschnitt flexibel ist und sich der Radius des Bogenabschnitts ändert, wenn sich die Fuge ausdehnt oder zusammenzieht. Diese Radiusänderung erlaubt eine Fugenbewegung über einen relativ großen Weg, ohne dass dies vom Auge wahrgenommen und als störend empfunden würde.

Der Übergang von der Wandoberfläche zum Flügelabschnitt kann durch Verspachteln unsichtbar gestaltet werden. Vorzugsweise ist das Material des Profilelements so gewählt, dass dieses mit herkömmlichen Wandfarben und Lacken überstreichbar ist. Das Profilelement kann auch direkt in einem farblich zur jeweiligen Wand passenden Farbton hergestellt werden. Somit lässt sich zumindest ein Abschnitt der Außenseite des Flügelabschnitts einfach verdecken.

Die Erfindung wird nachfolgend mit Bezug auf die beigefügten Zeichnungen anhand mehrerer Ausführungsbeispiele näher beschrieben. In den Zeichnungen zeigen:
- Figur 1 eine schematische Schnittansicht eines nicht beanspruchten Brandschutzprofils;
- Figur 2 das Brandschutzprofil aus Figur 1 mit einem daran montierten Anschlusselement;
- Figur 3 die Baugruppe aus Figur 2 in einem ersten Montageschritt befestigt an einem Bauwerksteil und aufgesetzt auf eine Wand;
- Figur 4 die Baugruppe aus Figur 3 nach einem zweiten Montageschritt;
- Figuren 5 und 6 die Baugruppe aus Figur 4 in Situationen, in denen sich die Bauwerksfuge zusammengezogen beziehungsweise ausgedehnt hat;
- Figur 7 eine schematische Schnittansicht eines erfindungsgemäßen Brandschutzprofils zur Verwendung in einer erfindungsgemäßen Brandschutzfugenbaugruppe und zur Montage mit einem erfindungsgemäßen Verfahren gemäß einer ersten Ausführungsform;
- Figur 8 das Brandschutzprofil aus Figur 7 fertig montiert zwischen einem Bauwerksteil und einer Wand;
- Figur 9 eine schematische Schnittansicht eines erfindungsgemäßen Brandschutzprofils zur Verwendung in einer erfindungsgemäßen Brandschutzfugenbaugruppe zur Montage mit einem erfindungsgemäßen Verfahren gemäß einer zweiten Ausführungsform;
- Figur 10 eine schematische Schnittansicht eines erfindungsgemäßen Brandschutzprofils zur Verwendung in einer erfindungsgemäßen Brandschutzfugenbaugruppe zur Montage mit einem erfindungsgemäßen Verfahren gemäß einer dritten Ausführungsform; und
- Figur 11 eine schematische Schnittansicht eines nicht beanspruchten Brandschutzprofils.

Die Figuren zeigen Brandschutzprofile 10 zur Abdichtung einer Bauwerksfuge 12 zwischen einer Wand 14 und einem Bauwerksteil 16 in mehreren Ausführungsformen. Die einzelnen Ausführungsformen unterscheiden sich im Wesentlichen in Details, wobei die Verwendung und auch das Montageverfahren des Brandschutzprofils großteils gleich sind. Daher werden im Folgenden die in den jeweiligen Ausführungsformen vergebenen Bezugszeichen für baugleiche oder im Wesentlichen baugleiche Teile in den weiteren Ausführungsformen beibehalten.

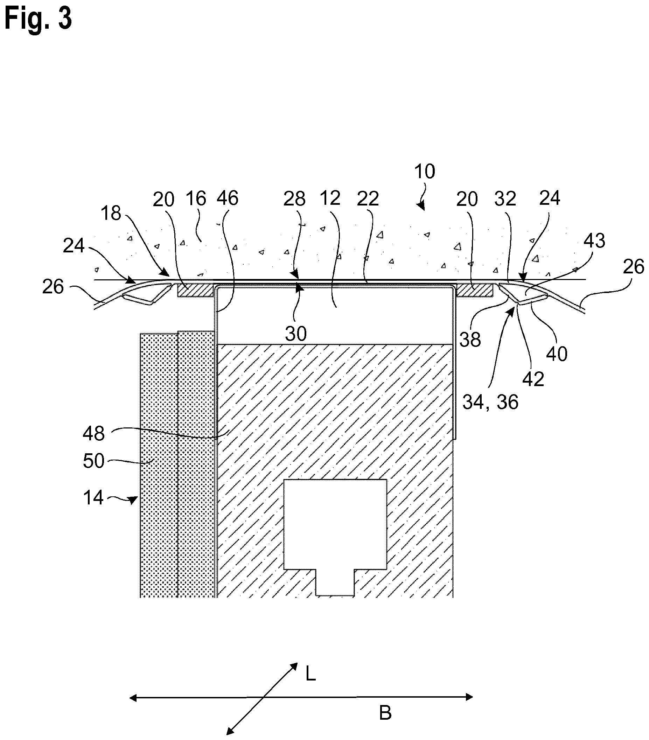

Das Brandschutzprofil 10 ist dazu gedacht, eine Bauwerksfuge 12 zwischen einer Trockenbauwand 14 und einem Bauwerksteil 16 abzudichten, also vollständig zu verschließen (siehe Figuren 3 bis 6).

Anstelle bei einer Trockenbauwand könnte das Brandschutzprofil 10 auch mit einem anderen Wandtyp oder generell einem anderen Bauwerksteil verwendet werden. Das Bauwerksteil 16 ist beispielsweise eine insbesondere massive Decke, könnte aber auch z.B. eine weitere Wand sein.

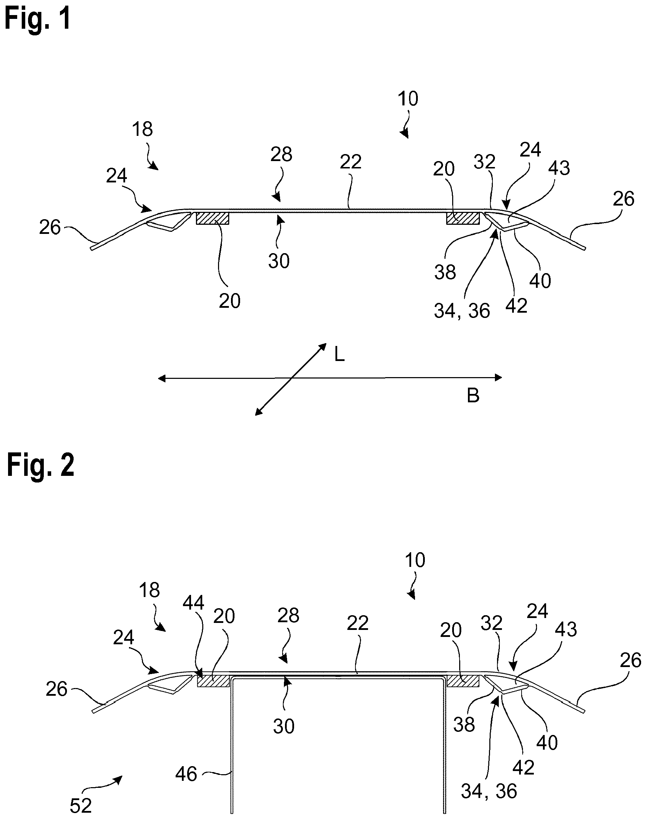

Figur 1 zeigt eine Schnittansicht des Brandschutzprofils 10 entlang einer Querrichtung B (im Folgenden mit einer Breite B gleichgesetzt), wobei sich das Brandschutzprofil 10 in Längsrichtung L in die Bildebene hinein mit im Wesentlichen unverändertem Querschnitt über die gesamte Länge der Bauwerksfuge 12 erstreckt.

Das Brandschutzprofil 10 umfasst ein Profilelement 18 sowie wenigstens ein Intumeszenzelement 20. Das Profilelement 18 bestimmt die wesentliche Form des Brandschutzprofils 10, während das Intumeszenzelement 20 in der hier gezeigten Ausführungsform nur abschnittsweise über die Breite B des Brandschutzprofils 10 vorgesehen ist. In Längsrichtung L erstrecken sich jedoch alle im Brandschutzprofil 10 vorgesehenen Intumeszenzelemente 20 über dessen gesamte Länge.

Als intumeszierendes Material kann jedes geeignete sich bei Hitzeeinwirkung aufblähende Material eingesetzt werden. Das Intumeszenzelement 20 besteht in dieser Ausführungsform beispielsweise aus einem separat vom Profilelement 18 hergestellten Brandschutzband, das über die gesamte Länge L des Brandschutzprofils 10 auf das Profilelement 18 aufgebracht ist. Es könnte auch ein Intumeszenzelement 18 aus einem geeigneten Schaum verwendet werden. Denkbar wäre es auch, das gesamte Brandschutzprofil 10 aus einem intumeszierenden Kunststoff herzustellen.

Das Profilelement 18 lässt sich aus einem geeigneten Kunststoff extrudieren und somit in beliebigen Längen entlang seiner Längsrichtung L, im Prinzip als Endlosband fertigen.

Generell hat das Brandschutzprofil 10 entlang der Breite B betrachtet einen flächigen Innenabschnitt 22 mit im Wesentlichen gleichbleibender Materialstärke, an den sich seitlich auf zumindest einer Seite ein Bogenabschnitt 24 sowie ein Flügelabschnitt 26 anschließen, wobei der Flügelabschnitt 26 in den Bogenabschnitt 24 übergeht.

Im hier gezeigten Beispiel ist das Profilelement 18 spiegelbildlich ausgebildet, sodass an beiden Seiten der Innenabschnitt 22 in einen Bogenabschnitt 24 und dann in einen Flügelabschnitt 26 übergeht. Die Flügelabschnitte 26 können insgesamt (jeweils bezogen auf die Breite B) kürzer als der Innenabschnitt 22 und sind ebenfalls flächig und mit einer im Wesentlichen gleichbleibenden Wandstärke ausgebildet sein. Alternativ können die Flügelabschnitte 26 insgesamt (jeweils bezogen auf die Breite B) auch länger als der Innenabschnitt 22 und ebenfalls flächig und mit einer im Wesentlichen gleichbleibenden Wandstärke ausgebildet sein.

Die beiden Bogenabschnitte 24 hingegen sind flexibel, sodass die Flügelabschnitte 26 bezüglich des Innenabschnitts 22 um die Bogenabschnitte 24 verschwenkt und insbesondere um etwa 90° heruntergeklappt werden können.

Eine Außenseite 28 des Profilelements 18 ist dazu vorgesehen, am Bauwerksteil 16 fixiert zu werden, während die der Außenseite 28 gegenüberliegende Innenseite 30 des Profilelements 18 zur Trockenbauwand 14 hin gerichtet ist.

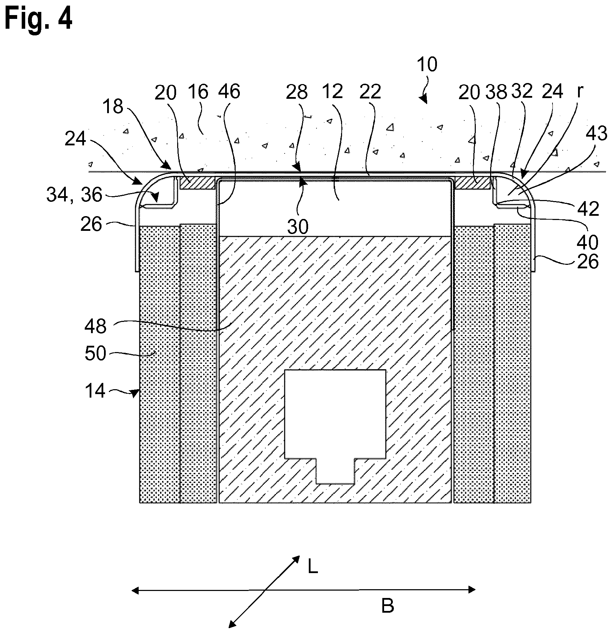

Die Flügelabschnitte 26 liegen im montierten Zustand, der in den Figuren 4 bis 6 dargestellt ist, jeweils zu beiden Seiten der Trockenbauwand 14.

In den Bogenabschnitten 24 kann die Wandstärke gegenüber dem Innenabschnitt 22 und/oder dem Flügelabschnitt 26 verändert sein.

In diesem Beispiel ist der Bogenabschnitt 24 doppelwandig ausgeführt. Ein äußerer Bogenabschnitt 32 ist hier einstückig und ohne erkennbaren Übergang zwischen dem Innenabschnitt 22 und dem Flügelabschnitt 26 angeordnet, während auf der Innenseite 30 unterhalb des äußeren Bogenabschnitts 32 ein innerer Bogenabschnitt 34 verläuft. Der innere Bogenabschnitt 34 hat die Form einer Strebe 36, die einen ersten und einen zweiten Verbindungsabschnitt 38, 40 aufweist, die an einer Sollbiegestelle 42 ineinander übergehen. Der erste Verbindungsabschnitt 38 ist an seinem anderen Ende mit dem Innenabschnitt 22 verbunden, während der zweite Verbindungsabschnitt 40 mit dem Flügelabschnitt 26 verbunden ist. Die beiden Bogenabschnitte 32, 34 schließen zwischen sich eine in Längsrichtung L verlaufende Kammer 43 ein.

Der innere Bogenabschnitt 34 ist hier einstückig mit dem restlichen Profilelement 18 gefertigt.

Die Materialstärke im äußeren Bogenabschnitt 32 ist so gewählt, dass der gesamte Bogenabschnitt 24 mit geringem Kraftaufwand vom Bauwerksteil 16 weg in Richtung zur Innenseite 30 des Profilelements 18 hin geklappt werden kann (nach unten in den Figuren).

In diesem Beispiel sind zwei Intumeszenzelemente 20 in Form von Brandschutzbändern mit quaderförmigem Querschnitt vorgesehen, die entlang der Längsrichtung L verlaufen und die unmittelbar anschließend an den Verbindungspunkt des ersten Verbindungsabschnitts 38 der Strebe 36 mit dem Innenabschnitt 22 an der Innenseite 30 des Innenabschnitts 22 fixiert sind.

Die beiden Intumeszenzelemente 20 bilden hier einen Abstandshalter 44, der die Position eines Anschlusselements 46 bezüglich des Profilelements 18 definiert und der eine Verschiebung des Anschlusselements 46 zu den Bogenabschnitten 24 hin begrenzt (siehe beispielsweise Figuren 2 und 3).

Das Anschlusselement 46 ist beispielsweise ein U-Profil, das einen freien Rand eines Ständerwerks 48 der Trockenbauwand 14 umgreifen kann.

Wie beispielsweise in Figur 3 zu erkennen ist, umfasst die Trockenbauwand 14 neben dem Ständerwerk 48 auch eine oder mehrere Wandplatten 50, insbesondere Gipskartonplatten, die seitlich auf das Ständerwerk 48 montiert sind.

Zur Montage des Brandschutzprofils 10 wird zunächst das Anschlusselement 46 an der Innenseite 30 des Innenabschnitts 22 des Profilelements 18 auf geeignete Weise fixiert (siehe Figur 2).

Dann wird die so entstandene Brandschutzfugenbaugruppe 52 am Bauwerksteil 16 auf geeignete Weise befestigt, sodass das Anschlusselement 46 vom Bauwerksteil 16 absteht.

Das Ständerwerk 48 der Trockenbauwand 14 wird in das Anschlusselement 46 eingepasst, wobei dieses jedoch nicht mit dem Ständerwerk 48 verbunden wird, sondern gegenüber diesem verschiebbar bleibt, um Dehnungsbewegungen der Trockenbauwand 14 bzw. des Bauwerksteils 16 zuzulassen. Zwischen dem freien Ende des Ständerwerks 48 und dem Bauwerksteil 16 ist die Bauwerksfuge 12 ausgebildet, die durch das Brandschutzprofil 10 verschlossen werden soll.

Auf die Außenseite des Ständerwerks 48 werden einseitig oder beidseitig eine oder mehrere Wandplatten 50 montiert, die ebenfalls nur mit dem Ständerwerk 48, nicht aber mit dem Anschlusselement 46 verbunden werden, sodass sich das Anschlusselement 46 auch gegenüber den Wandplatten 50 verschieben kann.

Im nächsten Montageschritt werden die beiden Flügelabschnitte 26 heruntergeklappt und an endseitigen Befestigungsabschnitten 54 an den Wandplatten 50 befestigt. Dies kann beispielsweise durch Kleben oder Klammern geschehen. Zu diesem Zweck können Öffnungen in den Befestigungsabschnitten 54 vorgesehen sein. Dieser Zustand ist in Figur 4 dargestellt.

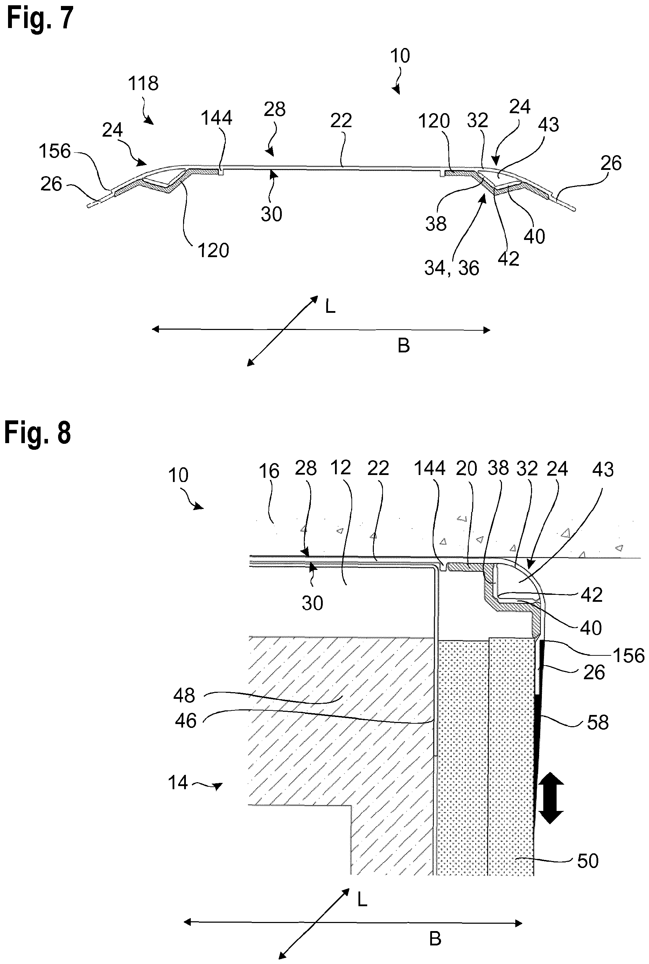

Der Übergang von der Wandoberfläche der Wandplatte 50 zum Flügelabschnitt 26 kann mit handelsüblichen Wandfarben und/oder Lacken überstrichen werden. Es ist auch möglich, diesen Übergang mit einer Spachtelmasse 58 zu verfüllen, um die durch den Rand des Flügelabschnitts 26 entstehende Kante zu glätten (siehe Figur 8).

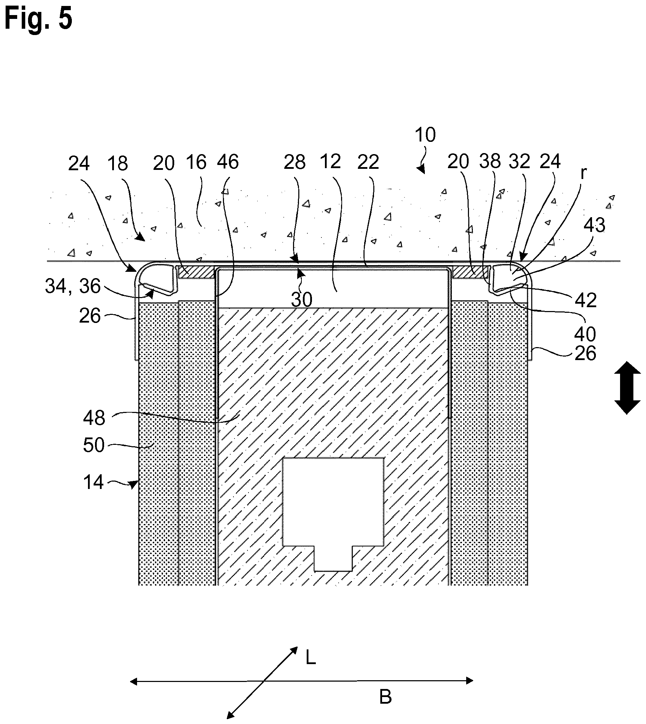

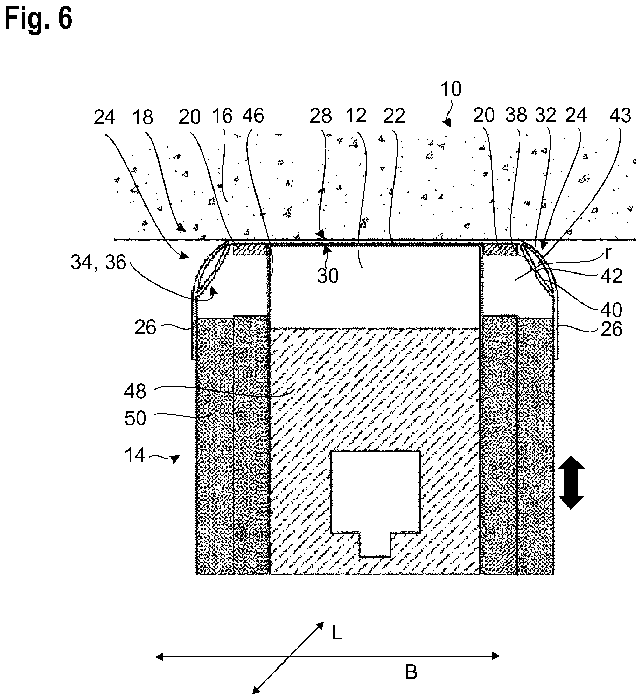

Das Profilelement 18 ist an der Außenseite 28 des Innenabschnitts 22 fest mit dem Bauwerksteil 16 und an der Innenseite des jeweiligen Flügelabschnitts 26 fest mit der Wandoberfläche der äußeren Wandplatte 50 verbunden. Diese Befestigungsstellen verschieben sich nicht gegenüber den jeweiligen Bauteilen, wenn sich die Bauwerksfuge 12 verkleinert oder vergrößert, sich also der Abstand zwischen dem Bauwerksteil 16 und dem oberen Rand des Ständerwerks 48 ändert. In diesen Fällen verformen sich die beiden Bogenabschnitte 24, wobei sich der Krümmungsradius r des äußeren Bogenabschnitts 32 sowie der Winkel zwischen dem ersten und zweiten Verbindungsabschnitt 38, 40 an der Sollbiegestelle 42 verändert (siehe Figuren 4 bis 6). Die Strebe 36 kann sich somit bei schrumpfender Bauwerksfuge 12 zusammenfalten, wobei der Winkel zwischen den Verbindungsabschnitten 38, 40 kleiner wird (siehe Figur 5), oder kann sich strecken, wenn die Bauwerksfuge 12 sich vergrößert (siehe Figur 6). Entsprechend ändert sich der Krümmungsradius r des äußeren Bogenabschnittes 32, wobei die Außenseite des äußeren Bogenabschnitts 32 jedoch in keinem Zustand einen Knick oder eine Falte bildet, sondern stets eine glatte Oberfläche und einen gerundeten Übergang vom Innenabschnitt 22 zum Flügelabschnitt 26 darstellt.

In der in den Figuren 7 und 8 dargestellten ersten Ausführungsform eines Brandschutzprofils 10 ist das Profilelement 118 im Wesentlichen gleich aufgebaut wie das Profilelement 18. Die einzigen Unterschiede liegen darin, dass der Abstandshalter 144 als einstückig mit dem Profilelement 118 gefertigter, von der Innenseite 30 des Innenabschnitts 22 abstehender Vorsprung gestaltet ist und dass im Befestigungsabschnitt 54 der beiden Flügelabschnitte 26 eine Stufe 156 ausgebildet ist, die das Erzielen eines unauffälligen Übergangs von der Wandplatte 50 zum Profilelement 118 beim Verspachteln mit Spachtelmasse 58 erleichtert (siehe Figur 8).

Des Weiteren ist hier das Intumeszenzelement 120 als dünne Schicht auf den inneren Bogenabschnitt 34 aufgebracht und bedeckt die Strebe 36 sowie anschließende Abschnitte der Innenseite 30 des Innenabschnitts 22 und der Innenseite des jeweiligen Flügelabschnitts 26 vollständig. Verformt sich der innere Bogenabschnitt 34, so verformt sich auch das Intumeszenzelement 120.

Sämtliche Merkmale aller beschriebenen Ausführungsformen können natürlich im Ermessen des Fachmanns miteinander kombiniert oder gegeneinander ausgetauscht werden.

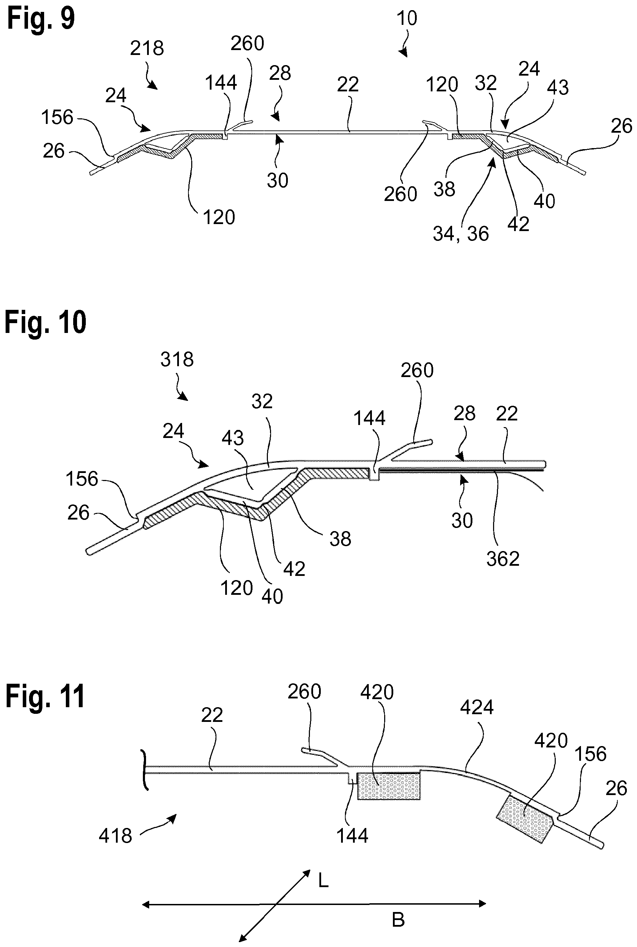

Figur 9 zeigt eine zweite Ausführungsform, bei der das Profilelement 218 im Gegensatz zur gerade beschriebenen ersten Ausführungsform kurz vor dem Übergang des Innenabschnitts 22 in den Bogenabschnitt 24 ein von der Außenseite 28 des Innenabschnitts 22 abstehendes Dichtelement 260 aufweist. Dieses Dichtelement 260 liegt nach der Montage zwischen dem Innenabschnitt 22 des Profilelements 218 und dem Bauwerksteil 16 und sorgt für eine zusätzliche Abdichtung.

Hier ist das Dichtelement 260 im Bereich des Abstandshalters 144, aber auf der gegenüberliegenden Seite des Innenabschnitts 22 angeordnet, es könnte jedoch auch an anderer Stelle platziert sein. Möglich ist auch, dass ein vollflächig flaches, anpassungsfähiges Schaumstoffmaterial im Bereich des Innenabschnitts aufgeklebt wird.

In diesem Beispiel ist das Dichtelement 260 einstückig mit dem restlichen Profilelement 218 gefertigt.

Auch in der ersten und zweiten Ausführungsform ist das Brandschutzprofil 10 bezüglich der Breite B spiegelbildlich ausgebildet, sodass auf beiden Seiten ein entsprechender Abstandshalter 144 und, in der zweiten Ausführungsform, ein Dichtelement 260 vorgesehen ist.

Figur 10 zeigt eine dritte Ausführungsform eines Brandschutzprofils 10, bei der nur an einer Seite des Profilelements 318 ein Bogenabschnitt 24 und ein Flügelabschnitt 26 vorgesehen ist. Diese Version des Brandschutzprofils 10 eignet sich beispielsweise für Fälle, in denen nur auf einer Seite der Trockenbauwand 14 ein Brandschutzprofil 10 vorgesehen sein soll. Um beispielsweise eine einfache Fixierung an einem Anschlusselement 46 (nicht dargestellt) zu ermöglichen, ist ein Haftstreifen 362 vorgesehen, hier eine selbstklebende Folie, der an der Innenseite 30 des Innenabschnitts 22 angeordnet ist und auf den das Anschlusselement 46 aufgeklebt werden kann.

Auch die Profilelemente der anderen Ausführungsformen könnten so ausgebildet sein, dass sie nur auf einer Seite einen Bogenabschnitt 24 und einen Flügelabschnitt 26 aufweisen.

Figur 11 schließlich zeigt ein nicht beanspruchtes Brandschutzprofils 10. Hier ist im Unterschied zur zweiten und dritten Ausführungsform der Bogenabschnitt 424 des Profilelements 418 nur einwandig gestaltet, dafür aber mit einer geringeren Materialstärke als der Innenabschnitt 22 und der Flügelabschnitt 26.

Außerdem sind hier zwei Intumeszenzelemente 420 im Bereich des Bogenabschnitts 424 vorgesehen, die jeweils neben dem Übergang des Innenabschnitts 22 in die Materialverjüngung des Bogenabschnitts 424 und neben dem Übergang des Flügelabschnitts 26 in die Materialverjüngung angeordnet sind.

Beim Herunterklappen des Flügelabschnitts 26 liegt dann eines der Intumeszenzelemente 420 an der Wandplatte 50 oder an einem oberen Rand der Wandplatte 50 an.

In Figur 11 ist das Brandschutzprofil 10 nur als einseitiges Profil gezeigt, es könnte aber genauso gut doppelseitig und dabei spiegelbildlich bezüglich der Breite B gestaltet sein.

Die Funktionsweise und Montage ist ansonsten identisch zu denen der Brandschutzprofile nach den bisherigen Ausführungsformen.

## Patentansprüche

1. Brandschutzprofil zum Abdichten einer Bauwerksfuge (12), insbesondere einer Anschlussfuge zwischen einer Trockenbauwand (14) und einer Decke, mit einem Profilelement (18; 118; 218; 318; 418), das eine Innenseite (30) sowie eine entgegengesetzt zur Innenseite (30) angeordnete Außenseite (28) aufweist und einen Innenabschnitt (22), zumindest einen Bogenabschnitt (24; 424) und zumindest einen Flügelabschnitt (26) umfasst, wobei der Flügelabschnitt (26) über den Bogenabschnitt (24; 424) mit dem Innenabschnitt (22) verbunden ist, und wenigstens einem Intumeszenzelement (20; 120; 420) aus intumeszierendem Material, wobei der Bogenabschnitt (24; 424) eine Wandstärke aufweist, die sich von der des Innenabschnitts (22) und/oder des Flügelabschnitts (26) gegebenenfalls unterscheidet, **dadurch gekennzeichnet, dass** der Bogenabschnitt (24) doppelwandig mit einem inneren und einem äußeren Bogenabschnitt (34, 32) gebildet ist, wobei der innere Bogenabschnitt (34) als Strebe (36) mit einem ersten Verbindungsabschnitt (38) und einem zweiten Verbindungsabschnitt (40) geformt ist und mit dem äußeren Bogenabschnitt (32) eine Kammer (43) bildet, und wobei das Intumeszenzelement (20; 120; 420) auf der Innenseite (30) am Profilelement (18; 118; 218; 318; 418) vorgesehen ist, wobei das Intumeszenzelement (20; 420) als Schicht vorgesehen ist, die sich vom Innenabschnitt (22) bis zum Flügelabschnitt (26) erstreckt.

2. Brandschutzprofil nach Anspruch 1, **dadurch gekennzeichnet, dass** der Bogenabschnitt (24; 424) zumindest abschnittsweise eine geringere Wandstärke aufweist als der Innenabschnitt (22) und/oder der Flügelabschnitt (26).

3. Brandschutzprofil nach einem der vorhergehenden Ansprüche, **dadurch gekennzeichnet, dass** ein Abstandshalter (44; 144) an der Innenseite (30) des Innenabschnitts (22) vorgesehen ist.

4. Brandschutzprofil nach einem der vorhergehenden Ansprüche, **dadurch gekennzeichnet, dass** der Flügelabschnitt (26) einen Befestigungsabschnitt (54) umfasst, wobei der Befestigungsabschnitt (54) eine Stufe (156) an der Außenseite und/oder Befestigungslöcher aufweist.

5. Brandschutzprofil nach einem der vorhergehenden Ansprüche, **dadurch gekennzeichnet, dass** das Profilelement (18; 118; 218; 418) beidseitig bezüglich seiner Breite (B) jeweils einen Bogenabschnitt (24; 424) und einen Flügelabschnitt (26) aufweist.

6. Brandschutzprofil nach einem der vorhergehenden Ansprüche, **dadurch gekennzeichnet, dass** das Brandschutzprofil vollständig aus einem flammgeschützten und intumeszierenden Material besteht.

7. Brandschutzprofil nach einem der Anspruche 1 bis 5, **dadurch gekennzeichnet, dass** das Profilelement (18; 118; 218; 318; 418) aus Kunststoff gebildet ist.

8. Brandschutzprofil nach einem der vorhergehenden Ansprüche, **dadurch gekennzeichnet, dass** das Brandschutzprofil (10) ein Dichtelement (260) umfasst.

9. Brandschutzprofil nach einem der vorhergehenden Ansprüche, **dadurch gekennzeichnet, dass** das Brandschutzprofil (10) einen Haftstreifen (362) aufweist.

10. Brandschutzfugenbaugruppe mit einem Brandschutzprofil (10) nach einem der vorhergehenden Ansprüche und einem Anschlusselement (46) einer Wand, insbesondere einer Trockenbauwand (14).

11. Brandschutzfugenbaugruppe nach Anspruch 10, **dadurch gekennzeichnet, dass** das der Flügelabschnitt (26) zumindest abschnittsweise an einer raumseitigen Wandoberfläche anliegt.

12. Brandschutzfugenbaugruppe nach Anspruch 10 oder 11, **dadurch gekennzeichnet, dass** die Trockenbauwand (14) aus einem Ständerwerk (48) mit mindestens einer die Wandoberfläche bildenden Wandplatte (50) gebildet ist, wobei das Anschlusselement (46) zumindest abschnittsweise zwischen dem Ständerwerk (48) und der Wandplatte (50) verschiebbar vorgesehen ist.

13. Verfahren zur Montage einer Brandschutzfugenbaugruppe (52) nach einem der Ansprüche 10 bis 12, mit den folgenden Schritten:
a) Befestigen des Brandschutzprofils (10) und des Anschlusselements (46) an einem Bauwerksteil (16), insbesondere einer Decke,
b) Installation des Ständerwerks (48),
c) Befestigen der mindestens einen Wandplatte (50) am Ständerwerk (48), und
d) Befestigen des Flügelabschnitts (26) an der raumseitigen Oberfläche der Wandplatte (50), wobei der Flügelabschnitt (26) zur Wandplatte (50) hin verstellt und der Bogenabschnitt (24; 424) dabei elastisch verformt wird.

14. Verfahren nach Anspruch 13, **dadurch gekennzeichnet, dass** das Verfahren nach Schritt d) den folgenden Schritt umfasst:
e) Verdecken zumindest eines Abschnitts der Außenseite des Flügelabschnitts (26).

## Claims

1. Fire protection profile for sealing a structural joint (12), in particular a connection joint between a drywall (14) and a ceiling, having a profile element (18; 118; 218; 318; 418) that has an inner face (30) and an outer face (28) arranged opposite the inner face (30), and comprises an inner portion (22), at least one arcuate portion (24; 424) and at least one wing portion (26), the wing portion (26) is joined to the inner portion (22) via the arcuate portion (24; 424), and having at least one intumescent element (20; 120; 420) of intumescent material, the arcuate portion (24; 424) having a wall thickness which optionally differs from that of the inner portion (22) and/or the wing portion (26), **characterized in that** the arcuate portion (24) is double-walled and has an inner arcuate portion and an outer arcuate portion (34, 32), the inner arcuate portion (34) being formed as a strut (36) having a first connecting portion (38) and a second connecting portion (40), and forming a chamber (43) together with the outer arcuate portion (32), and the intumescent element (20; 120; 420) being provided on the inner face (30) of the profile element (18; 118; 218; 318; 418), the intumescent element (20; 420) being provided as a layer extending from the inner portion (22) to the wing portion (26).

2. Fire protection profile according to claim 1, **characterized in that** the arcuate portion (24; 424) has a wall thickness, at least in portions, that is smaller than the inner portion (22) and/or the wing portion (26).

3. Fire protection profile according to either of the preceding claims, **characterized in that** a spacer (44; 144) is provided on the inner face (30) of the inner portion (22).

4. Fire protection profile according to any of the preceding claims, **characterized in that** the wing portion (26) comprises a fastening portion (54), the fastening portion (54) having a step (156) on the outer face and/or having fastening holes.

5. Fire protection profile according to any of the preceding claims, **characterized in that** the profile element (18; 118; 218; 418) has, on both sides with respect to the width (B), respectively an arcuate portion (24; 424) and a wing portion (26).

6. Fire protection profile according to any of the preceding claims, **characterized in that** the fire protection profile consists entirely of a flame-retardant and intumescent material.

7. Fire protection profile according to any of claims 1 to 5, **characterized in that** the profile element (18; 118; 218; 318; 418) is made of plastics material.

8. Fire protection profile according to any of the preceding claims, **characterized in that** the fire protection profile (10) comprises a sealing element (260).

9. Fire protection profile according to any of the preceding claims, **characterized in that** the fire protection profile (10) has an adhesive strip (362).

10. Fire protection joint assembly having a fire protection profile (10) according to any of the preceding claims, and a connecting element (46) of a wall, in particular of a drywall (14).

11. Fire protection joint assembly according to claim 10, **characterized in that** the wing portion (26) abuts a room-side wall surface at least in portions.

12. Fire protection joint assembly according to either claim 10 or claim 11, **characterized in that** the drywall (14) is formed by a framework (48) having at least one wall panel (50) forming the wall surface, the connecting element (46) being displaceably provided, at least in portions, between the framework (48) and the wall panel (50).

13. Method for assembling a fire protection joint assembly (52) according to any of claims 10 to 12, comprising the following steps:
a) fastening the fire protection profile (10) and the connecting element (46) to a structure part (16), in particular a ceiling,
b) installing the framework (48),
c) fastening the at least one wall panel (50) to the framework (48), and
d) fastening the wing portion (26) to the room-side surface of the wall panel (50), wherein the wing portion (26) is shifted toward the wall panel (50) and the arcuate portion (24; 424) is elastically deformed thereby.

14. Method according to claim 13, **characterized in that** the method according to step
d) comprises the following step:
e) concealing at least one portion of the outer face of the wing portion (26).

## Revendications

1. Profilé de protection contre l'incendie permettant l'étanchéité d'un joint structurel (12), en particulier d'un joint de raccordement entre une cloison structurelle sèche (14) et un plafond, comportant un élément profilé (18 ; 118 ; 218 ; 318 ; 418) qui présente un côté intérieur (30) et un côté extérieur (28) opposé au côté intérieur (30) et qui comprend une partie intérieure (22), au moins une partie incurvée (24 ; 424) et au moins une partie formant aile (26), la partie formant aile (26) étant reliée à la partie intérieure (22) par l'intermédiaire de la partie incurvée (24 ; 424), et au moins un élément intumescent (20 ; 120 ; 420) constitué d'un matériau intumescent, la partie incurvée (24 ; 424) présentant une épaisseur de cloison qui peut différer de celle de la partie intérieure (22) et/ou de la partie formant aile (26), **caractérisé en ce que** la partie incurvée (24) est formée à double cloison, comportant une partie incurvée interne et externe (34, 32), la partie incurvée interne (34) étant réalisée en tant qu'entretoise (36) comportant une première partie de liaison (38) et une seconde partie de liaison (40) et formant une chambre (43) avec la partie incurvée externe (32), et l'élément intumescent (20 ; 120 ; 420) étant prévu sur le côté intérieur (30) sur l'élément profilé (18 ; 118 ; 218 ; 318 ; 418), l'élément intumescent (20 ; 420) étant prévu en tant que couche s'étendant de la partie intérieure (22) à la partie formant aile (26).

2. Profilé de protection contre l'incendie selon la revendication 1, **caractérisé en ce que** la partie incurvée (24 ; 424) présente, au moins par parties, une épaisseur de cloison plus petite que la partie intérieure (22) et/ou la partie formant aile (26).

3. Profilé de protection contre l'incendie selon l'une des revendications précédentes, **caractérisé en ce qu'**un espaceur (44 ; 144) est prévu sur le côté intérieur (30) de la partie intérieure (22).

4. Profilé de protection contre l'incendie selon l'une des revendications précédentes, **caractérisé en ce que** la partie formant aile (26) comprend une partie de fixation (54), la partie de fixation (54) présentant un échelon (156) sur le côté extérieur et/ou des trous de fixation.

5. Profilé de protection contre l'incendie selon l'une des revendications précédentes, **caractérisé en ce que** l'élément profilé (18 ; 118 ; 218 ; 418) présente respectivement une partie incurvée (24 ; 424) et une partie formant aile (26) des deux côtés par rapport à sa largeur (B).

6. Profilé de protection contre l'incendie selon l'une des revendications précédentes, **caractérisé en ce que** le profilé de protection contre l'incendie est entièrement constitué d'un matériau ignifuge et intumescent.

7. Profilé de protection contre l'incendie selon l'une des revendications 1 à 5, **caractérisé en ce que** l'élément profilé (18 ; 118 ; 218 ; 318 ; 418) est en matière plastique.

8. Profilé de protection contre l'incendie selon l'une des revendications précédentes, **caractérisé en ce que** le profilé de protection (10) contre l'incendie comprend un élément d'étanchéité (260).

9. Profilé de protection contre l'incendie selon l'une des revendications précédentes, **caractérisé en ce que** le profilé de protection (10) contre l'incendie présente une bande adhésive (362).

10. Assemblage structurel de joint de protection contre l'incendie comportant un profilé de protection (10) contre l'incendie selon l'une des revendications précédentes et un élément de raccordement (46) d'une cloison, en particulier d'une cloison structurelle sèche (14).

11. Assemblage structurel de joint de protection contre l'incendie selon la revendication 10, **caractérisé en ce que** la partie formant aile (26) repose au moins par parties sur une surface de cloison côté pièce.

12. Assemblage structurel de joint de protection contre l'incendie selon la revendication 10 ou 11, **caractérisé en ce que** la cloison structurelle sèche (14) est formée d'une ossature (48) comportant au moins une plaque murale (50) formant la surface de cloison, l'élément de raccordement (46) étant prévu de manière coulissante au moins par parties entre l'ossature (48) et la plaque murale (50).

13. Procédé de montage d'un assemblage structurel de joint de protection (52) contre l'incendie selon l'une des revendications 10 à 12, comportant les étapes suivantes :
a) fixation du profilé de protection (10) contre l'incendie et de l'élément de raccordement (46) à une pièce structurelle (16), en particulier à un plafond,
b) installation de l'ossature (48),
c) fixation d'au moins une plaque murale (50) à l'ossature (48), et
d) fixation de la partie formant aile (26) à la surface côté pièce de la plaque murale (50), la partie formant aile (26) étant déplacée vers la plaque murale (50) et la partie incurvée (24 ; 424) étant alors déformée élastiquement.

14. Procédé selon la revendication 13, **caractérisé en ce que** le procédé comprend l'étape suivante réalisée après l'étape d) :
e) recouvrement d'au moins une partie du côté extérieur de la partie formant aile (26).
